# EUROPÄISCHE PATENTSCHRIFT

(11) **EP 2 741 946 B1**
(45) Veröffentlichungstag und Bekanntmachung des Hinweises auf die Patenterteilung: **30.11.2016**
(21) Anmeldenummer: 12745491.6
(22) Anmeldetag: 10.08.2012
(51) Int. Cl.: B60T 8/18, B60T 13/66, B60T 17/22, B60T 8/17, B60T 7/12, B60T 8/30, B60T 8/34, B60T 13/68

(54) **NOTBREMSEINRICHTUNG FÜR EIN SCHIENENFAHRZEUG, BREMSANLAGE FÜR EIN SCHIENENFAHRZEUG SOWIE SCHIENENFAHRZEUG**
EMERGENCY BRAKE DEVICE FOR A RAIL VEHICLE, BRAKE SYSTEM FOR A RAIL VEHICLE, AND RAIL VEHICLE
DISPOSITIF FREIN DE SECOURS POUR UN VÉHICULE FERROVIAIRE, SYSTÈME DE FREINAGE POUR UN VÉHICULE FERROVIAIRE ET VÉHICULE FERROVIAIRE

(30) Priorität: 12.08.2011 DE 102011110047
(43) Veröffentlichungstag der Anmeldung: 18.06.2014
(73) Patentinhaber: KNORR-BREMSE Systeme für Schienenfahrzeuge GmbH, 80809 München (DE)
(72) Erfinder: HERDEN, Marc-Oliver, 81377 München (DE); ENGLBRECHT, Matthaeus, 81673 München (DE)
(86) Internationale Anmeldenummer: PCT/EP2012/065668
(87) Internationale Veröffentlichungsnummer: WO 2013/024019

(56) Entgegenhaltungen:
- EP-A1- 0 438 678
- DE-B3-102008 012 700
- US-A1- 2007 236 077

## Beschreibung

Die vorliegende Erfindung betrifft eine Notbremseinrichtung für ein Schienenfahrzeug mit einer Notbremssteuerventileinrichtung gemäß dem Oberbegriff von Anspruch 1, eine Bremsanlage für ein Schienenfahrzeug sowie ein entsprechendes Schienenfahrzeug. Eine gattungsgemäße Notbremseinrichtung ist aus der DE 10 2008 012 700 B3 vorbekannt.

Bei modernen Schienenfahrzeugen werden häufig pneumatische Bremseinrichtungen verwendet, die durch elektronische Bremssteuereinrichtungen gesteuert werden. Um sicherzustellen, dass eine Notbremsung auch bei ausgefallener Elektronik erfolgen kann, ist in der Regel eine zusätzliche pneumatische Rückfallebene vorgesehen. Insbesondere soll eine Notbremseinrichtung sicherstellen, dass ein minimaler Notbremssteuerdruck zur Betätigung von Bremsaktuatoren des pneumatischen Bremssystems zur Verfügung steht. Bei einer Notbremsung besteht allerdings eine erhöhte Gefahr, dass so stark gebremst wird, dass die ausgeübte Bremskraft nicht mehr über den Reibkontakt zwischen Rad und Schiene aufgenommen werden kann. Dies kann zu einem Blockieren der Räder führen. Darüber hinaus führt eine Notbremsung häufig zu ruckartigem Verhalten des Schienenfahrzeugs, wodurch insbesondere stehende Passagiere gefährdet werden können.

Es ist daher Aufgabe der vorliegenden Erfindung, das Bremsverhalten eines Schienenfahrzeugs bei einer Notbremsung zu verbessern.

Diese Aufgabe wird durch die Merkmale der unabhängigen Ansprüche gelöst.

Weitere vorteilhafte Ausgestaltungen und Weiterbildungen der Erfindung ergeben sich aus den abhängigen Ansprüchen.

Im Rahmen dieser Beschreibung kann ein Schienenfahrzeug ein oder mehrere Wagen mit oder ohne eigenen Antrieb und/oder ein Zugfahrzeug in beliebiger Kombination verzeichnen. Insbesondere kann ein Schienenfahrzeug Triebwagen aufweisen. Eine pneumatische Bremseinrichtung kann pneumatisch und elektrisch betätigbare Komponenten aufweisen. Es ist vorstellbar, dass eine pneumatische oder elektropneumatische Bremseinrichtung insbesondere elektrisch ansteuerbare Ventile wie Magnetventile oder elektrisch ansteuerbare Vorsteuerventile aufweist. Eine pneumatische Bremseinrichtung kann insbesondere ein oder mehrere pneumatische betätigbare Aktuatoren oder Krafterzeuger aufweisen, beispielsweise Pneumatikzylinder. Derartige Aktuatoren könne dazu ausgebildet sein, Reibbremselemente einer oder mehrerer Reibbremseinrichtungen zu betätigen. Eine Reibbremseinrichtung kann beispielsweise als Reibelemente eine oder mehrere Bremsscheiben und zugehörige Bremsbacken mit Bremsbelag aufweisen, die durch einen Aktuator über eine Bremszange in reibenden Kontakt mit einer zugeordneten Bremsscheibe gebracht werden können. Die Reibbremseinrichtung kann auch als Klotzbremseinrichtung ausgebildet sein, bei der ein Klotz mit einem Bremsbelag durch einen Aktuator in einen reibenden Kontakt mit einer Lauffläche eines zu bremsenden Rades bringbar ist.

Erfindungsgemäß ist eine Notbremseinrichtung für ein Schienenfahrzeug mit einer Notbremssteuerventileinrichtung vorgesehen, welche es vermag, einer pneumatischen Bremseinrichtung des Schienenfahrzeugs einen Notbremssteuerdruck bereitzustellen. Die Notbremseinrichtung weist ferner eine Notbremsdruckeinstelleinrichtung auf, die es vermag, den der pneumatischen Bremseinrichtung bereitgestellten Notbremssteuerdruck in Abhängigkeit von mindestens einem Lastwert des Schienenfahrzeugs und einem Geschwindigkeitswert des Schienenfahrzeugs einzustellen. Somit kann auch während einer Notbremsung ein Blockieren der Räder vermieden werden und eine ruckfreie Bremsung erfolgen. Die Notbremseinrichtung kann insbesondere bei einer Notbremsung oder einer Schnellbremsung einen Notbremsteuerdruck bereitstellen. Die pneumatische Bremseinrichtung kann dazu ausgebildet sein, den Notbremssteuerdruck in einen bei der Bremsung zur Betätigung von Bremsaktuatoren wirksamen Notbremsdruck umzusetzen. Eine solche elektropneumatische Bremseinrichtung kann beispielsweise eine direkte oder indirekte Bremseinrichtung sein. Es kann vorgesehen sein, dass die Notbremseinrichtung einen vorgeschriebenen minimalen Notbremssteuerdruck bereitzustellen vermag. Die Notbremseinrichtung kann dazu ausgebildet sein, eine Rückfallebene für eine elektropneumatische Bremseinrichtung zu bieten. Die Notbremssteuerdruckeinstelleinrichtung kann separat von der Notbremssteuerventileinrichtung ausgebildet sein. Es ist auch vorstellbar die Notbremssteuerdruckeinstelleinrichtung gemeinsam mit der Notbremssteuerventileinrichtung auszubilden, beispielsweise als gemeinsames Notbremsmodul. Dabei können die Notbremssteuerventileinrichtung und die Notbremssteuerdruckeinstelleinrichtung in einem gemeinsamen Gehäuse oder an einem gemeinsamen Gehäuse angeordnet sein. Es kann vorgesehen sein, dass die Notbremssteuerventileinrichtung als pneumatische oder elektropneumatische Steuerventileinrichtung ausgebildet ist. Der Notbremssteuerdruck kann ein Bremssteuerdruck sein, der einem Leistungsverstärker oder Druckverstärker zugeführt wird, um in einem Notbremsdruck umgesetzt zu werden, der Bremsaktuatoren bereitgestellt wird. Der Geschwindigkeitswert kann insbesondere der Fahrtgeschwindigkeit des Schienenfahrzeugs entsprechen. Es ist vorstellbar, dass der Geschwindigkeitswert basierend auf Daten von Raddrehzahlsensoren oder anderen geeigneten Geschwindigkeitssensoren ermittelt wird, beispielsweise basierend auf GPS-Signalen, Radarsignalen und/oder optischen Signalen. Insbesondere ist es zweckmäßig, wenn der Geschwindigkeitswert ein aktueller Geschwindigkeitswert des Schienenfahrzeugs ist. Der mindestens eine Lastwert des Schienenfahrzeugs kann insbesondere einer Belastung einer oder mehrerer der pneumatischen Bremseinrichtung zugeordneten Achsen des Schienenfahrzeugs entsprechen. Der mindestens eine Lastwert kann beispielsweise basierend auf einem Lastdruck in einem oder mehreren in Achsennähe angebrachten Luftbalgen bestimmbar sein. Die Notbremssteuerdruckeinstelleinrichtung kann der Notbremssteuerventileinrichtung nachgeschaltet sein, um einen von in der Notbremssteuerventileinrichtung bereitgestellten Druck auf den Notbremssteuerdruck einzustellen. Es ist auch vorstellbar, dass die Notbremssteuerdruckeinstelleinrichtung direkt auf die Notbremssteuerventileinrichtung wirkt, um den Notbremssteuerdruck einzustellen, so dass der der pneumatischen Bremseinrichtung bereitgestellte Notbremssteuerdruck dem von der Notbremssteuerventileinrichtung bereitgestellten Bremssteuerdruck entspricht. Die Notbremseinrichtung kann in eine Bremsanlage integriert sein, die beispielsweise eine Hauptsteuerventileinrichtung zur Bereitstellung eines Bremssteuerdrucks und/oder Bremsdrucks umfassen kann. Eine derartige Hauptsteuerventileinrichtung kann durch eine elektronische Steuereinrichtung ansteuerbar sein, etwa durch einen Bremsrechner. Die Hauptsteuerventileinrichtung kann durch den Notbremssteuerdruck zur Bereitstellung eines Notbremsdrucks pneumatisch ansteuerbar sein. Ein Notbremsdruck kann dabei nach Maßgabe des Notbremssteuerdrucks durch die Hauptsteuerventileinrichtung einstellbar sein. Es ist vorstellbar, dass die Hauptsteuerventileinrichtung einen Druckumsetzer umfasst, der einen Steuerdruck in einen Bremsdruck umzusetzen vermag. Insbesondere können die Hauptsteuerventileinrichtung und der Druckumsetzer in oder an einem gemeinsamen Gehäuse angeordnet sein.

Es ist vorgesehen, dass die Notbremssteuerdruckeinstelleinrichtung es vermag, den Notbremssteuerdruck unter Berücksichtigung einer zeitlichen Änderung des Geschwindigkeitswertes einzustellen. Insbesondere kann eine kontinuierliche und/oder stetige und/oder dynamische Einstellung des Notbremssteuerdrucks in Abhängigkeit eines sich ändernden Geschwindigkeitswertes und/oder als Reaktion auf Änderungen des Geschwindigkeitswertes erfolgen. Es kann vorgesehen sein, dass die Einstellung des Notbremssteuerdrucks in Abhängigkeit von dem Geschwindigkeitswert dem zeitlichen Verlauf des Geschwindigkeitswertes über ein vorbestimmtes Intervall folgt. Das Intervall kann derart ausgewählt sein, dass es zwei Geschwindigkeitsbereiche mit unterschiedlichen, im Wesentlichen konstant verlaufenden Bremsdrücken verbindet. Im Intervall kann ein stetiger und/oder weicher Übergang des Bremsdrucks zwischen diesen Geschwindigkeitsbereichen durch die Notbremssteuerdruckeinstelleinrichtung eingestellt werden. Es ist vorteilhaft, dass zumindest über einen Teilbereich des Geschwindigkeitsverlaufes, beispielsweise in dem Intervall, die Einstellung des Notbremssteuerdrucks in Abhängigkeit von dem zeitlich veränderten Geschwindigkeitswert der Änderung des Geschwindigkeitswertes dynamisch und/oder kontinuierlich und/oder direkt folgt.

Es kann vorgesehen sein, dass die Notbremssteuerdruckeinstelleinrichtung eine Druckwippe zur Einstellung des Notbremssteuerdrucks aufweist. Der Druckwippe können geeignete Steuerdrücke zugeführt werden, um einen von der Notbremssteuerventileinrichtung bereitgestellten Notbremssteuerdruck in Abhängigkeit von dem Lastwert und dem Geschwindigkeitswert einzustellen. Somit kann auf einfache Art und Weise ein gewünschter Notbremssteuerdruck eingestellt werden.

Bei einer Weiterbildung kann vorgesehen sein, dass der Notbremssteuerdruckeinstelleinrichtung ein dem mindestens einen Lastwert entsprechender Lastdruck zur Einstellung des Notbremssteuerdrucks zugeführt oder zuführbar ist. Der Lastdruck kann als Steuerdruck einer Druckwippe zugeführt werden oder zuführbar sein. Auf diese Art kann pneumatisch der Notbremssteuerdruck eingestellt werden.

Es ist vorstellbar, dass der Notbremssteuerdruckeinstelleinrichtung ein dem Geschwindigkeitswert entsprechender Druckwert zur Einstellung des Notbremssteuerdrucks zugeführt wird oder zuführbar ist. Dazu kann beispielsweise eine elektropneumatische Ventileinrichtung vorgesehen sein, die ein dem Geschwindigkeitswert entsprechendes elektrisches Signal in einen entsprechenden pneumatischen Druck umzusetzen vermag, welcher der Notbremssteuerdruckeinstelleinrichtung zuführbar ist. Alternativ kann vorgesehen sein, dass die Notbremssteuerdruckeinstelleinrichtung dazu ausgebildet ist, die Einstellung des Notbremssteuerdrucks elektromagnetisch durchzuführen. Es kann beispielsweise ein Elektromagnet, etwa eine Spulenvorrichtung, vorgesehen sein, der durch eine auf dem Geschwindigkeitswert basierende Bestromung die Notbremssteuerdruckeinstelleinrichtung geeignet zu beeinflussen vermag, um die gewünschte Einstellung zu erreichen. Beispielsweise kann eine Druckwaage der Einstelleinrichtung durch einen solchen Elektromagneten gemäß einem Geschwindigkeitswert entsprechend ansteuerbar sein. Zur elektromagnetischen Ansteuerung kann eine geeignete Steuereinrichtung vorgesehen sein.

Es kann ferner vorgesehen sein, dass die Notbremseinrichtung eine elektronische Steuereinrichtung aufweist, die es vermag, die Notbremssteuerventileinrichtung anzusteuern. Das Ansteuern durch eine elektronische Steuereinrichtung kann allgemein das gezielte Versorgen elektropneumatischer Elemente, wie beispielsweise ein oder mehrere Magnetventile, mit Strom und/oder Spannung umfassen. Somit kann die Notbremssteuerventileinrichtung in gewünschter Weise angesteuert werden und es lässt sich eine zuverlässige und einfache Ansteuerung der Notbremssteuerventileinrichtung erreichen.

Bei einer Weiterbildung kann die elektronische Steuereinrichtung derart ausgebildet sein, dass sie es vermag, die Notbremssteuerventileinrichtung zur Bereitstellung eines Notbremssteuerdrucks basierend auf dem Geschwindigkeitswert und dem Lastwert anzusteuern. Somit kann die elektronische Steuereinrichtung als Notbremssteuerdruckeinstelleinrichtung ausgebildet sein. Dabei kann auf das Zuführen pneumatischer Steuerdrücke verzichtet werden, die dem Lastwert und/oder dem Geschwindigkeitswert entsprechen. Es ist zweckmäßig, dass die Notbremssteuerventileinrichtung derart ausgebildet ist, dass sie auch bei einem Ausfall der elektronischen Steuereinrichtung und/oder einer Bremssteuereinrichtung einen Notbremssteuerdruck bereitzustellen vermag.

Zweckmäßigerweise kann die elektronische Steuereinrichtung mit einer elektronischen Bremssteuereinrichtung verbunden oder verbindbar sein. Durch eine derartige Verbindung können Datensignale zwischen der elektronischen Steuereinrichtung der Notbremseinrichtung und der separat ausgebildeten elektronischen Bremssteuereinrichtung ausgetauscht werden. Die elektronische Steuereinrichtung der Notbremseinrichtung und die elektronische Bremssteuereinrichtung können dabei als unabhängig voneinander betreibbare Komponenten ausgebildet sein, die insbesondere unabhängig voneinander mit Strom versorgt seien können. Allgemein kann eine elektronische Bremssteuereinrichtung vorgesehen sein, die es vermag, die Notbremssteuerventileinrichtung und eine Hauptsteuerventileinrichtung anzusteuern, wobei letztere zum Bereitstellen eines Bremsdrucks und/oder eines Bremssteuerdruckes im Normalbetrieb ausgebildet ist. Gemäß einer Variante ist die elektronische Bremssteuereinrichtung dazu ausgebildet, im Fall einer vorgesehenen Betätigung oder Ansteuerung der Notbremssteuerventileinrichtung durch die elektronische Steuereinrichtung der Notbremseinrichtung eine Plausibilitätskontrolle der von der elektronischen Steuereinrichtung vorgesehenen Einstellung des Notbremssteuerdrucks vorzunehmen. Es kann vorgesehen sein, dass die elektronische Bremssteuereinrichtung es vermag, eine Ansteuerung der Notbremssteuerventileinrichtung durch die elektronische Steuereinrichtung der Notbremseinrichtung zu untersagen, wenn die Plausibilitätskontrolle ergeben hat, dass eine Ansteuerung nicht plausibel ist.

Ferner ist eine Bremsanlage für ein Schienenfahrzeug mit einer hierin beschriebenen Notbremseinrichtung vorgesehen. Die Bremsanlage kann neben einer elektronischen Steuereinrichtung oder Notbremseinrichtung eine elektronische Bremssteuereinrichtung und/oder einen Gleitschutzrechner aufweisen. Gleitschutzrechner, elektronische Steuereinrichtung der Notbremseinrichtung und elektronische Bremssteuereinrichtungen können als separat voneinander betreibbare Steuereinrichtungen ausgebildet sein, die insbesondere unabhängig voneinander mit Strom versorgbar sein können. Es kann vorgesehen sein, dass ein Gleitschutzrechner, die elektronische Bremssteuereinrichtung und die elektronische Steuereinrichtung der Notbremseinrichtung auf verschiedenen Ebenen in die Druckluftversorgung der pneumatischen Bremseinrichtung eingreifen. Insbesondere kann beispielsweise der Gleitschutzrechner zur Ansteuerung von Ablassventilen vorgesehen sein, die jeweils einem pneumatisch betätigten Aktuator zugeordnet sind. Über ein solches Ablassventil kann beispielsweise bei der Gefahr des Blockierens eines Rades der dem zugeordneten Aktuator zugeführte Druck verringert werden. Allgemein kann vorgesehen sein, dass eine Notbremseinrichtung in eine Bremsanlage integriert ist. Die Notbremseinrichtung kann ein Auswahlventil aufweisen. Das Auswahlventil kann zwei Eingänge und einen Ausgang aufweisen. Es kann dazu ausgebildet sein, denjenigen seiner Eingänge mit seinem Ausgang zu verbinden, an dem der höhere Druck anliegt. Dabei kann vorgesehen sein, dass an dem einen Eingang des Auswahlventils ein von einer Notbremssteuerventileinrichtung bereitgestellter Steuerdruck anliegt. Am anderen Eingang kann ein von einer Hauptsteuerventileinrichtung oder ein von einer weiteren Ventileinrichtung bereitgestellter Steuerdruck anliegen. Die weitere Ventileinrichtung kann eine Druckbegrenzungsventileinrichtung sein, welche einen Mindestnotbremssteuerdruck bereitstellt, der bei einer Notbremsung nicht unterschritten werden darf. Dabei kann die Druckbegrenzungsventileinrichtung einen in einem Druckluftreservoir vorliegenden hohen Druck auf den Mindestnotbremssteuerdruck begrenzen. Der bereitgestellte Mindestnotbremssteuerdruck kann im Wesentlichen konstant sein. Insbesondere kann vorgesehen sein, dass der Mindestnotbremssteuerdruck nicht elektronisch gesteuert, sondern rein pneumatisch bereitgestellt wird. Es ist vorstellbar, dass die Notbremseinrichtung eine Notbremsventileinrichtung aufweist, die durch einen Zugführer ansteuerbar sein kann. Die Notbremsventileinrichtung kann dazu ausgebildet sein, in einer ersten Schaltstellung, wenn keine Notbremsung durchgeführt werden soll, eine Verbindung zwischen einer Druckbegrenzungsventileinrichtung und einem Auswahlventil zu unterbrechen. In einer zweiten Schaltstellung der Notbremsventileinrichtung, wenn eine Notbremsung durchgeführt werden soll, kann vorgesehen sein, dass die Notbremsventileinrichtung eine pneumatische Verbindung zwischen einem Eingang des Auswahlventils und der Druckbegrenzungsventileinrichtung öffnet. Somit kann in der zweiten Schaltstellung ein Druck von der Druckbegrenzungsventileinrichtung am Auswahlventil anliegen. Eine Notbremsventileinrichtung kann eine ersten und einen zweiten Eingang sowie einen Ausgang aufweisen. Es kann vorgesehen sein, dass die Notbremsventileinrichtung eine Auswahlfunktion aufweist und denjenigen ihrer Eingänge mit dem Ausgang zu verbinden vermag, an dem der höhere Druck anliegt. Dabei kann vorgesehen sein, dass der Ausgang der Notbremsventileinrichtung mit einem Eingang eines Auswahlventils verbunden ist. Ein Eingang der Notbremsventileinrichtung kann mit einer Druckbegrenzungsventileinrichtung verbunden sein. Ein weiterer Eingang kann mit einer Hauptsteuerventileinrichtung verbunden sein. Somit kann jeweils der höchste der durch eine Hauptsteuerventileinrichtung und/oder eine Druckbegrenzungsventileinrichtung und/oder eine Notbremssteuerventileinrichtung bereitgestellten Steuerdrücke über das Auswahlventil als Notbremssteuerdruck ausgegeben werden, um einen entsprechenden Notbremsdruck zu erzeugen.

Darüber hinaus ist ein Schienenfahrzeug mit einer hierin beschriebenen Notbremseinrichtung und/oder einer hierin beschriebenen Bremsanlage vorgesehen.

Es zeigen:
- Figur 1: Beispiele für den Verlauf eines Bremsdrucks für eine pneumatische Bremseinrichtung eines Schienenfahrzeugs bei unterschiedlichen Lastwerten;
- Figur 2: schematisch eine Notbremseinrichtung;
- Figur 3: schematisch eine weitere Notbremseinrichtung;
- Figur 4: eine weitere Notbremseinrichtung;
- Figur 5: schematisch eine weitere Variante einer Notbremseinrichtung; und
- Figur 6: schematisch noch eine weitere Variante einer Notbremseinrichtung.

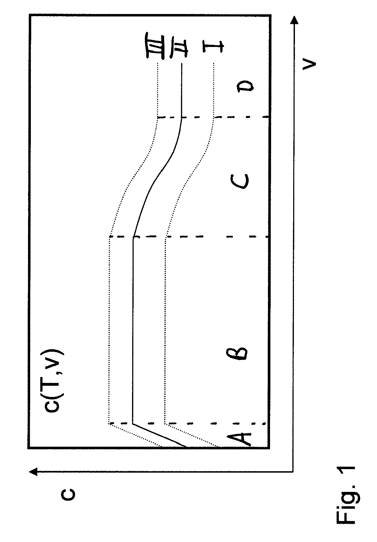

Figur 1 zeigt verschiedenen Verläufe von Notbremsdrücken c in Abhängigkeit vom Lastwert T und der Fahrtgeschwindigkeit v eines Schienenfahrzeugs. Gezeigt sind drei Kurven I, II und III bei unterschiedlichen Lastwerten. Ein Notbremsdruck hängt jeweils im Wesentlichen linear von einem Notbremssteuerdruck ab, so dass sich von den Bremsdrücken direkt auf die erforderlichen Steuerdrücke schließen lässt.

Allgemein kann bei einem höheren Lastwert über den Rad-Schiene-Kontakt ein höheres Maß an Kraft zur Bremsung des Fahrzeugs aufgenommen werden, da dann das Fahrzeug durch sein Gewicht fester auf die Schiene gepresst wird. Anders gesagt, der Adhäsionsbeiwert, welcher das Maß an Kraft definiert, das von dem Rad auf die Schiene übertragbar ist, ist bei einem höheren Lastwert größer als bei einem kleineren Lastwert. Somit können bei höherer Last eine größere Bremskraft und ein größerer Bremsdruck aufgebracht werden, ohne die Räder ins Blockieren zu treiben. Entsprechend repräsentiert die Kurve I einen niedrigen Lastwert, die Kurve II einen mittleren Lastwert und die Kurve III einen hohen Lastwert. Allgemein ändert sich die Belastung eines Schienenfahrzeugs beziehungsweise einer Achse des Schienenfahrzeugs im Betrieb nicht wesentlich. Durch dynamische Effekte können zwar Schwankungen im Lastdrucksignal auftauchen, beispielsweise durch bei der Beschleunigung oder Abbremsung des Schienenfahrzeugs erzeugte Schwingungen im Luftbalg, aber diese haben im Mittel keine Auswirkungen auf die Belastung des Fahrzeugs. Der eigentliche Lastwert wirkt sich im Wesentlichen auf die Lage jeder Kurve aus, insbesondere was den Startwert des Bremsdrucks bei der höchsten gezeigten Geschwindigkeit angeht. Allgemein lässt sich jede Kurve in vier Bereiche A, B, C und D unterteilen. Im Bereich D, der hohen Geschwindigkeiten entspricht, wird im Wesentlichen ein konstanter Notbremsdruck bereitgestellt. Der Bereich D liegt in der Regel oberhalb von 200 km/h. Bei hohen Geschwindigkeiten liegt ein niedriger Adhäsionsbeiwert vor. Daher ist entsprechend der Bremsdruck im Kurvenverlauf recht niedrig. Im Bereich B, bei deutlich niedrigeren Geschwindigkeiten und entsprechend höherem Adhäsionsbeiwert, wird im Wesentlichen ebenfalls ein konstanter höherer Bremsdruck angelegt. Bei sehr niedrigen Geschwindigkeiten, im Bereich A, wird der Bremsdruck allgemein bis zum Stillstand des Fahrzeugs abgesenkt. Die beschriebenen Notbremseinrichtungen sind in der Lage, den in der Figur 1 gezeigten Bereich C anzusteuern, die üblicherweise nicht vorhanden ist. Statt die Bereiche B und D derart aneinanderzulegen, dass sich ein Sprung im Bremsdruck bei Erreichen einer bestimmten Geschwindigkeit ergibt, die üblicherweise bei etwa 200 km/h liegt, ist der Übergangsbereich C vorgesehen. Dieser bietet einen weichen Kurvenverlauf, welcher die Bereiche D und B miteinander verbindet, ohne dass eine Unstetigkeit beziehungsweise ein Sprung im Bremsdruckkurvenverlauf auftritt. In diesem Bereich wird der Notbremssteuerdruck und somit der zugeordnete Bremsdruck in direkter Abhängigkeit von einem Geschwindigkeitswert des Schienenfahrzeugs eingestellt. Insbesondere ändert sich in diesem Bereich der eingestellte Notbremssteuerdruck kontinuierlich mit der Änderung der Geschwindigkeit, so dass sich ein stetiger Kurvenverlauf ergibt.

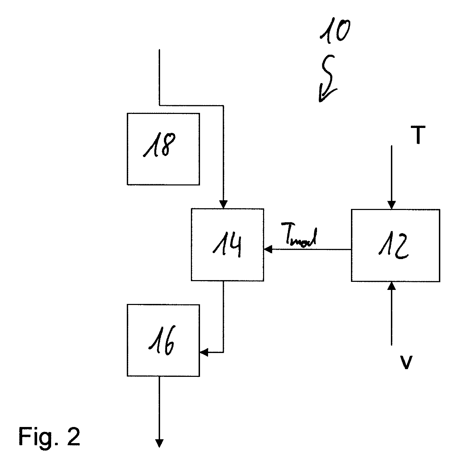

Figur 2 zeigt schematisch eine Notbremseinrichtung 10. Die Notbremseinrichtung 10 weist eine Notbremsdruckeinstelleinrichtung 12 und eine Notbremssteuerventileinrichtung 14 auf. Die Notbremssteuerventileinrichtung 14 kann mit einer nicht gezeigten Hauptluftleitung verbunden werden. Ferner ist die Notbremssteuerventileinrichtung 14 mit einem Einheitsdruckumsetzer 16 verbunden, der einen anliegenden Steuerdruck wie einen Notbremssteuerdruck in einen Bremsdruck umzusetzen vermag. In Figur 2 ist ferner eine Hauptsteuerventileinrichtung 18 gezeigt, über welche in einem Normalbetrieb, beispielsweise bei einer normalen Betriebsbremsung, ein Steuerdruck C_{V} bereitgestellt werden kann. Der Einheitsdruckumsetzer 16 kann den Steuerdruck in einen entsprechenden Bremsdruck umsetzten. Die Hauptsteuerventileinrichtung 18 kann durch eine elektronische Bremssteuereinrichtung (nicht gezeigt) ansteuerbar sein. Im Fall einer Notbremsung wird in diesem Beispiel allerdings die Notbremseinrichtung betätigt, so dass gegebenenfalls die Hauptsteuerventileinrichtung 18 umgangen wird. Aus Gründen der Übersicht sind in diesem Beispiel Verbindungsleitungen zwischen der Hauptsteuerventileinrichtung 18 und dem Einheitsdruckumsetzer 16 nicht gezeigt. In einer Variante kann die Notbremssteuerventileinrichtung 10 zwischen den Einheitsdruckumsetzer 16 und die Hauptsteuerventileinrichtung 18 geschaltet sein. Es sei angemerkt, dass statt eines Einheitsdruckumsetzers selbstverständlich auch ein Druckverstärker verwendet werden kann, welcher einen angelegten Steuerdruck nicht nur auf ein größeres Volumen überträgt, sondern auch erhöht.

In der in Figur 2 gezeigten Variante wird die Steuerventileinrichtung 14 der Notbremseinrichtung durch einen Druckabfall in der Hauptluftleitung angesteuert, um eine Notbremsung einzuleiten. Entsprechend stellt die Steuerventileinrichtung 14 einen Notbremssteuerdruck bereit, der an den Einheitsdruckumsetzer 16 weitergeleitet wird. Dieser Bremssteuerdruck wird durch einen von der Druckeinstelleinrichtung 12 bereitgestellten pneumatischen Laststeuerdruck modifiziert. Dazu wird ein pneumatisches Lastdrucksignal T_{mod} an die Steuerventileinrichtung 14 angelegt. Durch geeignete pneumatische Komponenten stellt die Steuerventileinrichtung 14 den von ihr ausgegeben Steuerdruck gemäß dem modifizierten Lastdrucksignal T_{mod} ein. In diesem Beispiel ist die Druckeinstelleinrichtung 12 derart ausgebildet, dass sie ein pneumatisches Lastdrucksignal zu empfangen vermag, welches einen Lastwert des Schienenfahrzeugs beziehungsweise einer zugeordneten Achse angibt. Dieses Signal kann beispielsweise von einem Luftbalg stammen. Ferner wird der Druckeinstelleinrichtung 12 ein Geschwindigkeitssignal zugeführt. Dieses Signal kann ein elektrisches oder pneumatisches Signal sein. Die in diesem Beispiel gezeigte Druckeinstelleinrichtung 12 ist derart ausgebildet, dass sie ein veränderliches Lastdrucksignal T_{mod} an die Steuerventileinrichtung 14 anzulegen vermag. Dieses Lastdrucksignal T_{mod} wird in Abhängigkeit von der Geschwindigkeit eingestellt. Die Einstellung kann pneumatisch oder elektropneumatisch erfolgen. In diesem Beispiel ist vorgesehen, dass die Druckeinstelleinrichtung 12 eine Druckwippe aufweist, welche pneumatisch ein entsprechendes modifiziertes Lastdrucksignal zu erzeugen vermag. Es ist vorgesehen, dass bei hohen Geschwindigkeiten, wenn erfahrungsgemäß der Adhäsionsbeiwert zwischen Rad und Schiene geringer ist als bei niedrigerer Geschwindigkeit, der modifizierte Lastdruckwert T_{mod} geringer eingestellt ist als bei niedrigeren Geschwindigkeiten. Somit wird der Steuerventileinrichtung 14 ein "virtuelles" Lastwertsignal bereitgestellt, dass einen niedrigeren Lastwert angibt, als es die eigentliche Last erwarten ließe. Entsprechend werden ein geringerer Bremssteuerdruck und somit auch ein niedrigerer Bremsdruck zur Bremsung bereitgestellt. Es kann insbesondere vorgesehen sein, dass eine derartige Modifikation des Lastdrucksignals T_{mod} innerhalb eines vorbestimmten Geschwindigkeitsbereichs vorgenommen wird, der zwei Extremwerte für den Bremssteuerdruck und/oder Bereiche mit im Wesentlichen konstanten Bremsdrücken miteinander verbindet, wie es der Bereich C in Figur 1 zeigt. Die Notbremssteuerventileinrichtung 14 und die Notbremsdruckeinstelleinrichtung 12 bilden gemeinsam eine Notbremseinrichtung.

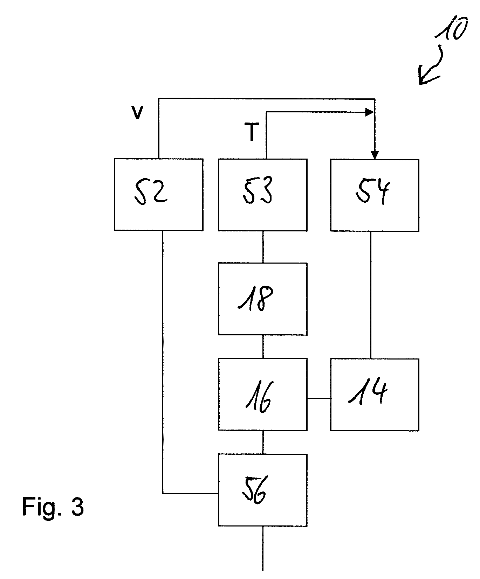

Figur 3 zeigt eine pneumatische Bremseinrichtung 10 für ein Schienenfahrzeug mit einer Notbremseinrichtung. Die Bremseinrichtung 10 weist eine elektronische Gleitschutzsteuereinrichtung oder einen Gleitschutzrechner 52 auf. Ferner sind eine elektronische Bremssteuereinrichtung 53 sowie eine elektronische Steuereinrichtung 54 einer Notbremseinrichtung vorgesehen. Der Gleitschutzrechner 52 ist mit einem oder mehreren Ablassventilen 56 zum Bereitstellen einer Gleitschutzfunktion verbunden. Dazu sind die Ablassventile im Druckluftkreis hinter einem Einheitsdruckumsetzer 16 angeordnet, der den Bremsdruck für nicht gezeigte pneumatische Aktuatoren bereitstellt. Durch die Ablassventile 56 kann der an bestimmten Aktuatoren anliegende Bremsdruck nach Maßgabe des Gleitschutzrechners 52 verringert werden. Ferner ist wie in Figur 2 eine Hauptsteuerventileinrichtung 18 vorgesehen, die einen Bremssteuerdruck für den Einheitsdruckumsetzer 16 bereitzustellen vermag. Die Hauptsteuerventileinrichtung 18 ist von der elektronischen Bremssteuereinrichtung 53 ansteuerbar, um einen gewünschten Bremssteuerdruck Cᵥ bereitzustellen. Optional kann die elektronische Bremssteuereinrichtung 53 zur Ansteuerung der Ablassventile 56 ausgebildet sein. Dazu kann die Bremssteuereinrichtung 53 mit den Ventilen 56 direkt oder indirekt verbunden sein. Eine indirekte Verbindung kann beispielsweise über den Gleitschutzrechner 52 erfolgen. Die Steuereinrichtung 54 ist dazu vorgesehen, die Steuerventileinrichtung 14 der Notbremseinrichtung in Abhängigkeit von Last und Geschwindigkeit anzusteuern und kann als Teil der Notbremseinrichtung angesehen werden. Dementsprechend ist die Steuerventileinrichtung 14 in diesem Fall als elektropneumatische Einrichtung ausgebildet, die durch die elektronische Steuereinrichtung 54 elektrisch ansteuerbar ist. Die Steuerventileinrichtung 14 der Notbremseinrichtung ist dazu ausgebildet, einen Notbremssteuerdruck nach Maßgabe der Steuereinrichtung 54 bereitzustellen. Dieser Notbremssteuerdruck ist durch die Steuereinrichtung 54 basierend auf Lastwertdaten T und einem Geschwindigkeitswert v eingestellt. In diesem Beispiel ist vorgesehen, dass der elektronischen Bremssteuereinrichtung 53 ein oder mehrere Lastwertdaten umfassende Lastsignale zugeführt werden, zu deren Empfang die Bremssteuereinrichtung 53 ausgebildet ist. Diese somit verfügbaren Daten T übermittelt die elektronische Bremssteuereinrichtung 53 an die Steuereinrichtung 54 der Notbremseinrichtung, die zu ihrem Empfang ausgebildet ist. Die Steuereinrichtung 54 kann in einer Baueinheit mit der Steuerventileinrichtung 14 der Notbremseinrichtung ausgebildet sein. In diesem Beispiel entfällt die in Figur 2 gezeigte pneumatische Druckeinstelleinrichtung 12 der Notbremseinrichtung, deren Aufgabe von der elektronischen Steuereinrichtung 54 übernommen wird, die somit als Druckeinstelleinrichtung wirkt. Die Notbremseinrichtung der Figur 3 umfasst daher die elektronische Steuereinrichtung 54 und die Steuerventileinrichtung 14. Zum Erfüllen seiner Gleitschutzfunktion verfügt der Gleitschutzrechner 52 über Geschwindigkeitsdaten des Schienenfahrzeugs, insbesondere bezüglich der Fahrtgeschwindigkeit. Dazu kann der Gleitschutzrechner 52 beispielsweise aus Daten von Radgeschwindigkeitssensoren die Fahrzeuggeschwindigkeit ermitteln. In diesem Beispiel werden Geschwindigkeitsdaten v vom Gleitschutzrechner 52 an die elektronische Steuereinrichtung 54 der Notbremseinrichtung 10 übermittelt, die diese Informationen zu empfangen vermag. Somit kann die elektronische Steuereinrichtung 54 der Notbremseinrichtung 10 schon vorhandene Daten v, T verwenden. Es versteht sich, dass die elektronische Steuereinrichtung 54 auf geeignete Art mit anderen Sensoren und/oder Steuereinrichtungen verbunden sein kann, um die zur Ansteuerung der Steuerventileinrichtung 14 verwendeten Lastwerte T und Fahrtgeschwindigkeitswerte v zu empfangen. Allgemein kann eine Steuereinrichtung 54 kann dazu ausgebildet sein, bei Ausfall der Übermittlung von Geschwindigkeitsdaten v und/oder Lastwertdaten T einen vordefinierten Rückfall-Notbremsdruck anzusteuern

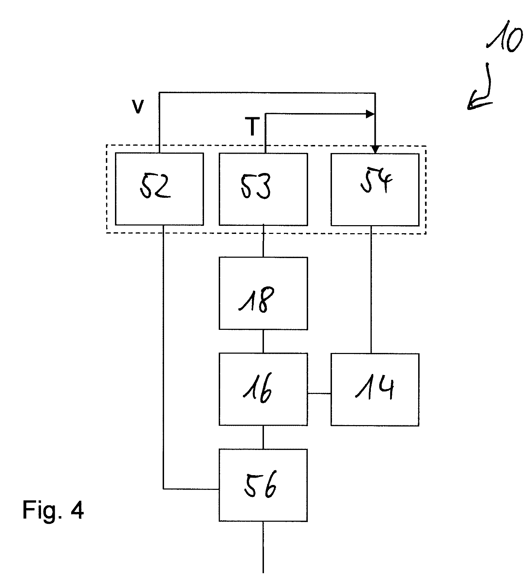

Figur 4 zeigt schematisch eine Variante der in Figur 3 gezeigten Bremseinrichtung 10. In diesem Beispiel sind die Steuereinrichtungen, nämlich der Gleitschutzrechner 52, die elektronische Bremssteuereinrichtung 53 und die Steuereinrichtung 54 der Notbremseinrichtung in einer gemeinsamen Baueinheit angeordnet, beispielsweise einem gemeinsamen Gehäuse oder in fest miteinander verbundenen Gehäusen. Zweckmäßigerweise sind die Steuereinrichtungen getrennt voneinander funktionsfähig, um einen gleichzeitigen Ausfall mehrerer Steuereinrichtungen zu verhindern.

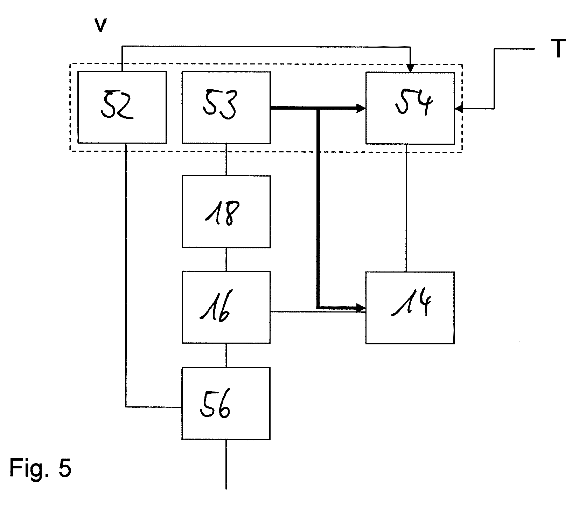

Figur 5 zeigt eine weitere Variante einer Bremseinrichtung mit einer Notbremseinrichtung, die im Wesentlichen dieselben Komponenten wie die in Figur 4 gezeigte Variante aufweist. Im Beispiel der Figur 5 ist eine Datenübertragungsverbindung zwischen der elektronischen Bremssteuereinrichtung 53 und der Steuereinrichtung 54 der Notbremseinrichtung vorgesehen. Über diese Verbindung können beispielsweise Steuerbefehle und Informationen über den Fahrzeug- oder Bremszustand übertragen werden. Darüber hinaus wird in diesem Beispiel der elektronischen Steuereinrichtung 54 ein Lastwertsignal von außen zugeführt, beispielsweise durch einen geeigneten Lastwertsensor. Zusätzlich kann eine Übertragung von Lastwertdaten T von der Bremssteuereinrichtung 53 vorgesehen sein, welche beispielsweise zur Plausibilitätskontrolle und/oder zur Bereitstellung einer Redundanzebene dienen können. Im Fall einer Notbremsung kann über die Datenübertragungsverbindung die elektronische Bremssteuereinrichtung 53 eine Plausibilitätskontrolle der durch die Steuereinrichtung 54 vorgesehenen Notbremsung durchführen. Insbesondere kann die elektronische Bremssteuereinrichtung 53 dazu ausgebildet sein, Lastwertdaten zu empfangen und zu verarbeiten, um so eine zusätzlichen Redundanz zu erzeugen. Beispielsweise kann die Bremssteuereinrichtung 53 mit einem geeigneten Lastwertsensor verbunden sein, der Signale liefert, die von der Steuereinrichtung 54 zugeführten Signalen unabhängig sind. Stellt die elektronische Bremssteuereinrichtung 53 fest, dass die von der Steuereinrichtung 54 vorgesehene Notbremsung nicht plausibel ist, beispielsweise weil sie bestimmte vordefinierte Plausibilitätskriterien nicht erfüllt, kann die elektronische Bremssteuereinrichtung 53 eine Ansteuerung der Steuerventileinrichtung 14 durch die Steuereinrichtung 54 untersagen oder verhindern. In diesem Fall kann eine rein pneumatische Notbremsung durchgeführt werden, bei welcher der Bremsdruck gegebenenfalls nicht direkt in Abhängigkeit von der Geschwindigkeit gesteuert wird. Es kann vorgesehen sein, dass die elektronische Bremssteuereinrichtung 53 zur Ansteuerung der Steuereinrichtung 14 der Notbremseinrichtung ausgebildet und verbunden ist. Somit kann dann, wenn die elektronischen Bremssteuereinrichtung 53 eine Ansteuerung der Steuerventileinrichtung 14 durch die Steuereinrichtung 54 der Notbremseinrichtung 10 untersagt, die elektronische Bremssteuereinrichtung 53 stattdessen die Steuerventileinrichtung 14 selbst ansteuern. Dazu kann es zweckmäßig sein, dass die elektronische Bremssteuereinrichtung 53 ebenfalls dazu ausgebildet ist, Fahrtgeschwindigkeitsdaten zu empfangen, die ihr beispielsweise über geeignete Sensoren, eine übergeordnete Steuereinrichtung oder durch den Gleitschutzrechner 52 bereitgestellt sein können. Es ist allerdings auch vorstellbar, dass die elektronische Bremssteuereinrichtung 53 die Steuerventileinrichtung 14 im Notbremsfall unter Umgehung der elektronischen Steuereinrichtung 54 lastwertunabhängig und/oder geschwindigkeitsunabhängig anzusteuern vermag, um eine Rückfallebene mit definiertem Notbremssteuerdruck beziehungsweise Notbremsdruck zu bieten. Bei Ausfall der Bremssteuereinrichtung 53 und der Steuereinrichtung 54 kann eine pneumatische Notbremsung durchgeführt werden.

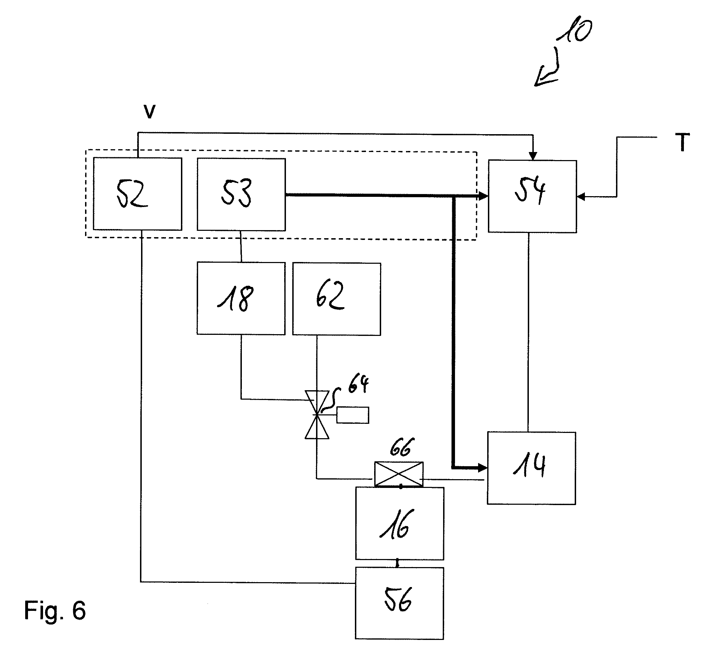

Figur 6 zeigt schematisch eine weitere Bremseinrichtung 10. Im Vergleich zur in der Figur 5 gezeigten Bremseinrichtung sieht diese Variante eine zusätzliche pneumatisch ansteuerbare Rückfallebene vor. In dem Beispiel sind der Gleitschutzrechner 52 und die elektronische Bremssteuereinrichtung 53 in einer Baueinheit zusammengefasst. Die Steuereinrichtung 54 der Notbremseinrichtung ist als separate Steuereinrichtung ausgebildet. Es ist eine Druckbegrenzungsventileinrichtung 62 vorgesehen, die an eine Notbremsventileinrichtung 64 einen für eine Notbremsung vorgesehenen Mindestdruck Cₘᵢₙ anlegt. Dazu kann die Druckbegrenzungsventileinrichtung 62 mit einem Druckreservoir verbunden sein, dessen Speicherdruck sie auf den Mindestdruck reduziert an die Notbremsventileinrichtung 64 anzulegen vermag. Die Notbremsventileinrichtung 64 kann beispielsweise direkt durch einen Zugführer angesteuert werden. Ein Eingang der Notbremsventileinrichtung 64 ist mit dem Druckbegrenzungsventileinrichtung 62 verbunden und ein anderer Eingang ist mit der Hauptsteuerventileinrichtung 18 verbunden. Ein Ausgang der Notbremsventileinrichtung 64 ist mit einem Auswahlventil 66 verbunden, das in diesem Beispiel ein Doppelrückschlagventil sein kann. Es ist vorstellbar, dass die Notbremsventileinrichtung 64 als 3/2 Wegeventil ausgebildet ist. In einem Normalbetriebsfall ist die Notbremsventileinrichtung 64 derart geschaltet, dass eine Verbindung des Ausgangs der Notbremsventileinrichtung 64 zum Druckbegrenzungsventil 62 abgesperrt ist. Das Auswahlventil 66 weist zwei Eingänge und einen Ausgang auf. Der Ausgang des Auswahlventils 66 ist mit einem Einheitsdruckumsetzer 16 beziehungsweise einem Druckverstärker verbunden, der einen am Ausgang des Auswahlventils 66 anliegenden Druck in einen Bremsdruck umzusetzen vermag. Das Auswahlventil 66 ist derart ausgebildet, dass es den Ausgang mit denjenigen seiner Eingänge verbindet, an dem der höhere Druck anliegt. In einem Normalbetriebsfall, also dann, wenn beispielsweise eine Betriebsbremsung erfolgt, stellt die Hauptsteuerventileinrichtung 18 nach Maßgabe der elektronischen Bremssteuereinrichtung 53 einen Bremssteuerdruck bereit, der über die Notbremsventileinrichtung 64 an dem einem Eingang des Auswahlventils 66 anliegt. In diesem Fall ist durch die Notbremsventileinrichtung 64 die Verbindung zwischen der Auswahlventileinrichtung 66 und dem Druckbegrenzungsventil 62 gesperrt. Der mit dem Ausgang der Steuerventileinrichtung 14 der Notbremseinrichtung verbundene Ausgang des Auswahlventils 66 steht in diesem Fall nicht unter Druck, da weder über die Steuereinrichtung 54 der Notbremseinrichtung noch über die elektronische Bremssteuereinrichtung 53 die Steuerventileinrichtung 14 zum Bereitstellen eines Notbremssteuerdrucks angesteuert ist. Daher erfolgt in diesem Fall eine normale Betriebsbremsung nach Maßgabe des Bremssteuerdrucks, welcher über das Auswahlventil 66 dem Einheitsdruckumsetzer 20 zugeführt wird. Im Notbremsfall wird die Notbremsventileinrichtung 64 in eine Durchgangsstellung geschaltet, in welcher das Druckbegrenzungsventil 62 mit der Auswahlventileinrichtung 66 verbunden ist. Optional kann die elektronische Bremssteuereinrichtung 53 eine Notbremsung über die Hauptsteuerventileinrichtung 18 ansteuern, und beispielsweise einen Bremssteuerdruck Cᵥ bereitstellen. Es kann vorgesehen sein, dass die Notbremsventileinrichtung 64 eine zusätzliche Auswahlventilfunktion aufweist, welche den höheren der Drücke Cᵥ und Cₘᵢₙ zum Eingang des Auswahlventils 66 weiterleitet. In diesem Fall steht an diesem Eingang des Auswahlventils 66 der höhere der beiden Drücke aus diesem Zweig der Bremseinrichtung an. Ist beispielsweise die elektronische Bremssteuereinrichtung 53 ausgefallen, oder ist keine Notbremssteuerung durch die Bremssteuereinrichtung 53 vorgesehen, liegt am Auswahlventil 66 der vom Druckbegrenzungsventil 62 bereitgestellte Druck Cₘᵢₙ an. Auf der anderen Seite wird, wie mit Bezug auf Figur 5 beschrieben, die Steuerventileinrichtung 14 entweder von der Steuereinrichtung 54 oder von der elektronischen Bremssteuereinrichtung 53 angesteuert, um einen Notbremssteuerdruck zu erzeugen. Dieser liegt am zweiten Eingang der Auswahlventils 66 an. Das Auswahlventil 66 wird sich derart einstellen, dass der höchste anliegende Druck zum Einheitsdruckumsetzer 16 weitergeleitet wird. Somit wird bei dieser Variante jeweils der höchste anliegende Steuerdruck für die Bremsung wirksam. Dies führt insbesondere dazu, dass es bis zu drei unterschiedliche Steuerdrücke gibt, die über die Hauptsteuerventileinrichtung 18, das Druckbegrenzungsventil 62 und die Steuerventileinrichtung 14 der Notbremseinrichtung 10 bereitgestellt werden können. Die beschriebene Variante stellt sicher, dass der höchste Steuerdruck wirksam wird. Sollte eine oder gar zwei der Steuerdruckbereitstellungssysteme versagen, kann immer noch ein dritter Druck bereitgestellt werden. Somit ergeben sich in diesem Beispiel zwei Rückfallebenen für das Bereitstellen von Steuerdrücken bei einer Notbremsung. Insbesondere ist sichergestellt, dass selbst bei Ausfall der elektronischen Steuereinrichtungen 52, 53 und 54 auf pneumatische Art über die Druckbegrenzungseinrichtung 62 ein Mindestnotbremsdruck bereitgestellt ist. Die Druckbegrenzungsventileinrichtung 62, das Auswahlventil 66 und die Notbremsventileinrichtung 64 können als Teil der Notbremseinrichtung angesehen werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Bremseinrichtung
- 12: Druckeinstelleinrichtung
- 14: Steuerventileinrichtung
- 16: Einheitsdruckumsetzer
- 18: Hauptsteuerventileinrichtung
- 52: Gleitschutzrechner
- 53: elektronische Bremssteuereinrichtung
- 54: elektronische Steuereinrichtung
- 56: Ablassventil
- 62: Druckbegrenzungsventileinrichtung
- 64: Notbremsventileinrichtung
- 66: Auswahlventil

## Patentansprüche

1. Notbremseinrichtung für ein Schienenfahrzeug, mit:
einer Notbremssteuerventileinrichtung (14), welche es vermag, einer pneumatischen Bremseinrichtung des Schienenfahrzeugs einen Notbremssteuerdruck bereitzustellen; und
einer Notbremseinstelleinrichtung (12, 54), die es vermag, den der pneumatischen Bremseinrichtung bereitgestellten Notbremssteuerdruck in Abhängigkeit von mindestens einem Lastwert des Schienenfahrzeugs;
**dadurch gekennzeichnet, dass** die Notbremsdruckeinstelleinrichtung (12, 54) es vermag, den Notbremssteuerdruck in Abhängigkeit von einem Geschwindigkeitswert des Schienenfahrzeugs einzustellen und unter Berücksichtigung einer zeitlichen Änderung des Geschwindigkeitswertes einzustellen.

2. Notbremseinrichtung nach Anspruch 1, wobei die Notbremsdruckeinstelleinrichtung (12) eine Druckwippe zur Einstellung des Notbremssteuerdrucks aufweist.

3. Notbremseinrichtung nach Anspruch 1 oder 2, wobei der Notbremsdruckeinstelleinrichtung (12) ein dem mindestens einen Lastwert entsprechender Lastdruck zur Einstellung des Notbremssteuerdrucks zugeführt oder zuführbar ist.

4. Notbremseinrichtung nach einem der vorhergehenden Ansprüche, wobei der Notbremsdruckeinstelleinrichtung (12) ein dem Geschwindigkeitswert entsprechender Druck zu Einstellung des Notbremssteuerdrucks zugeführt oder zuführbar ist.

5. Notbremseinrichtung nach einem der vorhergehenden Ansprüche, ferner umfassend eine elektronische Steuereinrichtung (54), die es vermag, die Notbremssteuerventileinrichtung (14) anzusteuern.

6. Notbremseinrichtung nach Anspruch 5, wobei die elektronische Steuereinrichtung (54) dazu ausgebildet ist, die Notbremssteuerventileinrichtung (14) basierend auf dem Geschwindigkeitswert und/oder dem mindestens einen Lastwert zur Bereitstellung eines Notbremssteuerdrucks anzusteuern.

7. Notbremseinrichtung nach Anspruch 5 oder 6, wobei die elektronische Steuereinrichtung (54) mit einer elektronischen Bremssteuereinrichtung (53) verbunden oder verbindbar ist.

8. Bremsanlage für ein Schienenfahrzeug mit einer Notbremseinrichtung nach einem der Ansprüche 1 bis 7.

9. Schienenfahrzeug mit einer Notbremseinrichtung nach einem der Ansprüche 1 bis 8 und/oder einer Bremsanlage nach Anspruch 8.

## Claims

1. Emergency brake device for a rail vehicle, comprising:
an emergency brake control valve device (14) which can provide an emergency brake control pressure to a pneumatic brake device of the rail vehicle; and
an emergency brake adjustment device (12, 54) which can the emergency brake control pressure, which is provided to the pneumatic brake device, as a function of at least one load value of the rail vehicle; **characterized in that** the emergency brake pressure adjustment device (12, 54) can adjust the emergency brake control pressure as a function of a speed value of the rail vehicle and taking into account a change in the speed value over time.

2. Emergency brake device according to Claim 1, wherein the emergency brake pressure adjustment device (12) has a pressure rocker for adjusting the emergency brake control pressure.

3. Emergency brake device according to Claim 1 or 2 wherein a load pressure which corresponds to the at least one load value is supplied or can be supplied to the emergency brake pressure adjustment device (12) in order to adjust the emergency brake control pressure.

4. Emergency brake device according to one of the preceding claims, wherein a pressure which corresponds to the speed value is supplied or can be supplied to the emergency brake pressure adjustment device (12) in order to adjust the emergency brake control pressure.

5. Emergency brake device according to one of the preceding claims, further comprising an electronic control device (54) which can actuate the emergency brake control valve device (14).

6. Emergency brake device according to Claim 5, wherein the electronic control device (54) is designed to actuate the emergency brake control valve device (14) based on the speed value and/or the at least one load value in order to provide an emergency brake control pressure.

7. Emergency brake device according to Claim 5 or 6, wherein the electronic control device (54) is connected or can be connected to an electronic brake control device (53).

8. Brake system for a rail vehicle comprising an emergency brake device according to one of Claims 1 to 7.

9. Rail vehicle comprising an emergency brake device according to one of Claims 1 to 8 and/or a brake system according to Claim 8.

## Revendications

1. Dispositif de frein de secours pour un véhicule ferroviaire, comprenant :
un dispositif (14) de soupape de commande de frein de secours, qui permet de mettre à disposition d'un dispositif de frein pneumatique du véhicule ferroviaire une pression de commande de frein de secours et
un dispositif (12, 54) de réglage de frein de secours, qui permet de régler la pression de commande de frein de secours mise à disposition du dispositif de frein pneumatique en fonction d'au moins une valeur de charge du véhicule ferroviaire ;
**caractérisé en ce que** le dispositif (12, 54) de réglage de la pression de frein de secours permet de régler la pression de commande de frein de secours en fonction d'une valeur de vitesse du véhicule ferroviaire et de la régler en tenant compte d'une variation en fonction du temps de la valeur de la vitesse.

2. Dispositif de frein de secours suivant la revendication 1, dans lequel le dispositif (12) de réglage de la pression de frein de secours a une bascule manométrique pour régler la pression de commande de frein de secours.

3. Dispositif de frein de secours suivant la revendication 1 ou 2, dans lequel une pression de charge correspondant à la au moins une valeur de charge est, pour régler la pression de commande de frein de secours, envoyée au dispositif (12) de réglage de la pression de frein de secours ou peut l'être.

4. Dispositif de frein de secours suivant l'une des revendications précédentes, dans lequel une pression correspondant à la valeur de vitesse est, pour régler la pression de commande de frein de secours, envoyée au dispositif (12) de réglage de la pression de frein de secours ou peut l'être.

5. Dispositif de frein de secours suivant l'une des revendications précédentes, comprenant, en outre, un dispositif (54) électronique de commande, qui permet de commander le dispositif (14) de soupape de commande de frein de secours.

6. Dispositif de frein de secours suivant la revendication 5, dans lequel le dispositif (54) électronique de commande est constitué pour commander, pour la mise à disposition d'une pression de commande de frein de secours, le dispositif (14) de soupape de commande de frein sur la base de la valeur des vitesses et/ou de la au moins une valeur de charge.

7. Dispositif de frein de secours suivant la revendication 5 ou 6, dans lequel le dispositif (54) électronique de commande est relié à un dispositif (53) électronique de commande de frein ou peut l'être.

8. Système de frein pour un véhicule ferroviaire ayant un dispositif de frein de secours suivant l'une des revendications 1 à 7.

9. Véhicule ferroviaire ayant un dispositif de frein de secours suivant l'une des revendications 1 à 6 et/ou un système de frein suivant la revendication 8.
